(19) Europäisches Patentamt
European Patent Office
Office européen des brevets

(11) Numéro de publication: **0 077 705**
**B1**

# (12) FASCICULE DE BREVET EUROPEEN

(45) Date de publication du fascicule du brevet: **10.04.85**

(51) Int. Cl.⁴: **B 23 K 9/28**

(21) Numéro de dépôt: **82401815.4**

(22) Date de dépôt: **05.10.82**

## (54) Torche de soudage à électrode réfractaire et double flux de protection, et procédé de soudage correspondant.

(30) Priorité: **14.10.81 FR 8119295**

(43) Date de publication de la demande: **27.04.83 Bulletin 83/17**

(45) Mention de la délivrance du brevet: **10.04.85 Bulletin 85/15**

(84) Etats contractants désignés: **AT BE CH DE FR GB IT LI LU NL SE**

(56) Documents cités:
**DE - A - 1 565 426**
**GB - A - 742 164**

(73) Titulaire: **LA SOUDURE AUTOGENE FRANCAISE, 75, Quai d'Orsay, F-75007 Paris (FR)**

(84) Etats contractants désignés: **BE CH DE FR GB LI LU NL AT**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(84) Etats contractants désignés: **IT SE**

(72) Inventeur: **Cuny, Francis, 6, rue du Général de Gaulle, F-78250 Mezy-sur-Seine (FR)**
Inventeur: **Auzary, Louis, 73, rue Curiale, F-75019 Paris (FR)**

(74) Mandataire: **Leclercq, Maurice et al, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 07 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention est relative à une torche de soudage à arc à électrode réfractaire disposée axialement et protection à double flux, du type comprenant, d'une part, un premier conduit annulaire entre ladite électrode axiale et un manchon concentrique, ce premier conduit ayant une largeur, suivant un rayon, comprise entre 0,5 et 1,5 mm, d'autre part, un deuxième conduit annulaire concentrique au premier entre ledit manchon et une buse de torche.

Dans les torches de ce type (voir le brevet FR N° 2243770), le flux central de gaz est étroit, s'écoule à une vitesse relativement grande et assure essentiellement un confinement de l'arc. Dans une certaine gamme de débits, avec un écoulement bien régulier et un refroidissement énergique du manchon, le gaz central est ainsi suffisamment bien canalisé pour s'écouler de façon sensiblement laminaire autour de l'arc et confiner efficacement celui-ci et, par suite, en accroître la stabilité et donc le pouvoir de pénétration. Cette stabilité conduit à son tour à une bonne reproductibilité des cordons de soudure.

Pour cela, le débit du gaz central doit rester relativement modéré, de sorte que ce gaz ne suffit pas pour protéger contre l'oxydation la totalité du bain de fusion. Cette protection est assurée par le flux de gaz périphérique qui passe par le second conduit annulaire. Dans les conditions précitées, les turbulences de ce flux périphérique n'affectent pas sensiblement l'écoulement laminaire du flux central.

Aves les torches connues du type considéré, d'excellents résultats ont été obtenus dans le cas des matériels automatiques de forte puissance, pour lesquels l'intensité de soudage est un facteur prépondérant. Par contre, pour le soudage manuel à faible puissance (intensités de moins de 150 A), la titulaire a émis l'hypothèse que d'autres paramètres pouvaient influer sur les résultats du soudage, et notamment sur le pouvoir de pénétration de l'arc.

L'invention a pour but de fournir une torche de soudage qui convienne très bien pour le soudage manuel, bien que son utilisation en soudage automatique ne soit nullement exclue.

A cet effet, l'invention a pour objet une torche de soudage du type précité, caractérisée en ce que ledit second conduit annulaire a une forme générale convergente entre une paroi externe du manchon présentant un angle de convergence au sommet α et une paroi interne de la buse présentant un angle de convergence au sommet β, les angles de convergence au sommet α et β étant choisis, dans un système de coordonnées rectangulaires dont l'abscisse représente l'angle de convergence au sommet α et dont l'ordonnée représente l'angle de convergence au sommet β, à l'intérieur d'un quadrilatère délimité par les quatre sommets $S'_1$, $S'_2$, $S'_3$, $S'_4$ suivants:

$S'_1$: $\alpha'_1 = 17{,}5°$
$\beta'_1 = 27{,}5°$

$S'_2$: $\alpha'_2 = 7{,}5°$
$\beta'_2 = 20°$

$S'_3$: $\alpha'_3 = 7{,}5°$
$\beta'_3 = 15°$

$S'_4$: $\alpha'_4 = 17{,}5°$
$\beta'_4 = 7{,}5°$

Suivant une autre caractéristique de l'invention, le rapport $D_2/D_1$ du diamètre extérieur de sortie $D_2$ du manchon au diamètre intérieur de sortie $D_1$ de ce manchon est compris entre 1,6 et 2,1. De préférence, le rapport $D_3/D_2$ du diamètre intérieur de sortie $D_3$ de la buse au diamètre extérieur de sortie $D_2$ du manchon est également compris entre 1,6 et 2,1. Cela définit les conditions optimales d'écoulement du gaz annulaire et de mélange de ce gaz avec le gaz central.

La titulaire a constaté que la distance X, au cours de laquelle le gaz annulaire s'écoule entre buse et manchon sans rencontrer d'accident de parcours autre qu'une réduction progressive de la section de passage, influe également sur les résultats du soudage. De plus, il est avantageux que l'électrode fasse saillie au-delà du manchon sur une distance comprise entre 3 et 15 mm, de préférence entre 3 et 6 mm.

L'invention a également pour objet un procédé de soudage à l'arc au moyen d'une torche telle que définie ci-dessus. Suivant ce procédé, on établit une différence de potentiel entre une pièce à souder et l'électrode de la torche telle que revendiquée en envoyant dans ledit premier conduit un gaz inerte contenant éventuellement de l'hydrogène dans une proportion au plus égale à 10%, et en envoyant dans le second conduit un gaz inerte contenant éventuellement un gaz métallurgiquement actif.

Pour une interprétation correcte des résultats de cette étude, il apparaît nécessaire de préciser quelles sont les conditions des tests et quels ont été les critères d'appréciation de la qualité des cordons de soudure.

Les éprouvettes ont une épaisseur de 1,5, 3 et 4 mm et sont réalisées en acier au carbone de nuances XES pour une épaisseur de 1,5 mm, TC pour une épaisseur de 3 mm et 10C pour une épaisseur de 4 mm (désignation suivant les normes françaises A 36301 et A 36401).

Toutes ces éprouvettes ont été décapées de façon à éviter la projection de calamine sur l'électrode de tungstène. Leurs dimensions étaient de 250×80 mm et les bords à assembler ne comportaient aucun chanfrein. Un pointage préalable a été effectué par le procédé TIG sans métal d'apport. Du métal d'apport a été utilisé uniquement pour souder les éprouvettes de 3 et 4 mm d'épaisseur, et ce métal est constitué d'une baguette métallique ayant la nuance suivante: $C \leqslant 0{,}08\%$; $Cr = 0{,}5\%$; $Mo = 0{,}5\%$; $S \leqslant 0{,}03\%$; $P \leqslant 0{,}03\%$, de diamètre de 2 mm. Le gaz de soudage utilisé est, pour le flux central, un mélange d'hydrogène 5% dans l'argon et, pour le flux annulaire, de l'argon pur.

Les tests ont été exécutés par soudage manuel effectué en position horizontale, et, pour chaque test, on a relevé le temps de soudage, permettant ainsi de déterminer la vitesse v globale de soudage.

Les critères d'appréciation de la qualité de soudage sont au nombre de cinq:

– pouvoir de pénétration de l'arc,
– stabilité de l'arc,
– bombé superficiel du cordon de soudure,
– régularité du cordon face endroit,
– régularité du cordon face envers.

Revenant rapidement sur ces différents critères, on précise qu'on considère qu'un arc est d'autant plus pénétrant qu'il permet:

– une vitesse de soudage v d'autant plus élevée,
– une largeur envers de cordon lv d'autant plus importante,
– une largeur de cordon endroit ld d'autant plus étroite,

en sorte que l'on a pris en considération le résultat global selon la formule $v \times \frac{lv}{ld}$, étant précisé que, pour ne pas avantager certains cordons exceptionnellement plus larges à l'envers qu'à l'endroit, les rapports $\frac{lv}{ld} > 1$ ont été ramenés à la valeur 1.

Pour faciliter l'appréciation des résultats, trois niveaux de cotation du pouvoir de pénétration ont été retenus: bon (++); acceptable (+); médiocre (0).

En ce qui concerne la stabilité de l'arc, on précise qu'un arc est admis comme stable lorsque sa position dans l'espace demeure invariante pendant la totalité de l'essai de soudage et, là également, on a appliqué trois barèmes de cotation, à savoir: bon (++): pas d'instabilité; acceptable (+): quelques instabilités de faible amplitude; médiocre (0): instabilités plus marquées pouvant, à la limite, rendre la fusion de la tôle incontrôlable.

En ce qui concerne le bombé superficiel, qui est défini par la cote maximale du cordon au-dessus du plan de l'éprouvette, on précise que la présence d'un bombé constitue une garantie contre tout affaiblissement mécanique de la soudure qui serait dû à une diminution de section soudée et, bien entendu, la présence d'un effondrement en lieu et place du bombé doit donc être pénalisée.

Ici, également, on a appliqué trois barèmes de cotation, à savoir: bon (++): cordon uniformément et nettement bombé; acceptable (+): cordon plat ou bombé seulement par endroits; médiocre (0): cordon présentant des effondrements.

*Nota:* Les soudures d'éprouvettes de 1,5 mm d'épaisseur ayant été effectuées sans métal d'apport n'ont pas été notées quant à leur bombé superficiel.

En ce qui concerne la régularité endroit et la régularité envers qui se définissent par le fait qu'une soudure est d'autant plus régulière que son parcours est d'autant plus rectiligne (exception faite des accidents éventuels dus au mode manuel de soudage), il s'agit là d'appréciations très subjectives, et l'on a appliqué également ici trois barêmes: bon (++); acceptable (+); médiocre (0).

L'invention est maintenant explicitée par la description qui suit en référence au dessin annexé dans lequel:

– la fig. 1 est une vue en coupe axiale d'une torche selon l'invention;

– la fig. 2 est un diagramme définissant une zone optimale de choix des angles α et β et une zone préférentielle assurant des résultats de très bonne qualité.

En se référant à la fig. 1, une torche selon l'invention comporte une électrode axiale en tungstène 1 entourée à distance d'écartement (en diamètre) comprise entre 1 et 3 mm par un manchon coaxial 2 ayant une paroi intérieure 3 de forme cylindrique et une paroi extérieure 4 de forme conique convergente (angle de convergence au sommet α) vers une extrémité 5 d'électrode 1, et une buse de torche de soudage 7 constituée d'une pièce massive de forme conique ayant une paroi intérieure conique 8, l'angle de convergence au sommet β étant orienté également en direction de la pointe de l'électrode 1. Les faces d'extrémité du manchon 2 et de la buse 7 sont contenues dans un même plan perpendiculaire à l'axe de la torche, plan au-delà duquel l'électrode fait saillie sur une distance comprise entre 3 et 6 mm.

De façon habituelle, un gaz de protection est introduit dans un conduit annulaire central 10 ménagé entre l'électrode 1 et le manchon 2, tandis qu'un second gaz de protection est introduit dans un conduit annulaire 11 ménagé entre le manchon 4 et la buse 7. Pour cela, les conduits 10 et 11 sont reliés respectivement à deux sources de gaz 12 et 13.

En désignant par $D_1$ à $D_3$ les diamètres de sortie respectifs des parois 3, 4 et 8, les relations suivantes sont vérifiées:

$1,6 \leqslant D_3/D_2 \leqslant 2,1$

$1,6 \leqslant D_2/D_1 \leqslant 2,1$

Dans cette forme de réalisation, le manchon 2 et la buse 7 présentent des surfaces externe 4 et interne 8, respectivement, qui sont rigoureusement coniques sur une distance axiale indiquée par X, qui n'est pas inférieure à 13 mm.

Dans les résultats d'essais qui sont donnés ci-après, on a donc fait varier les angles α et β entre 10 et 25° (de 5 en 5°) et en fait, pour chaque angle α de 10, 15, 20 et 25°, on a procédé à des essais pour un angle β de 10, 15, 20 et 25°, sauf pour l'angle α=25° où l'angle β de 10° est irréalisable.

Les résultats de ces essais ont été consignés sur le tableau I et concernent les éprouvettes d'épaisseurs 1,5, 3 et 4 mm respectivement, soudées avec des arcs d'intensité 50, 80 et 86 A, et les résultats sont complétés par d'autres tests sur une plus large gamme d'angles incluant α=5° (dont les résultats sont donnés dans le tableau II), et β=0°, permettant de confirmer le domaine assez précis des valeurs optimales. Il y a lieu de noter que ces tests concernent des éprouvettes de 4 mm d'épaisseur, soudées avec un arc de 86 A.

Dans le conduit 11, le débit, exprimé en litres par minute, est du même ordre que le diamètre intérieur $D_3$ de la buse 7, exprimé en millimètres. Dans le conduit 10, il est compris entre 1,5 (valeur minimale pour obtenir un confinement de l'arc) et 4 l/min (valeur maximale pour obtenir un bain de fusion calme). Ces valeurs correspondent au cas où le gaz est de l'argon ou a une densité voisine de l'argon; pour un gaz de densité $d_{Ar}$ par rapport à l'argon nettement différente de 1, il faut les multiplier par $1/\sqrt{d_{Ar}}$.

*Tableaux* ⟶

De ce qui précède, une large concordance apparaît entre les deux séries de tests et il ressort que l'on peut tracer trois zones de qualités de soudure:

– Zone I: qualité de soudure optimale, celle circonscrite par les points:

$S''_1: \alpha''_1 = 17{,}5°$
$\beta''_1 = 22{,}5°$
$S''_2: \alpha''_2 = 12{,}5°$
$\beta''_2 = 22{,}5°$
$S''_3: \alpha''_3 = 12{,}5°$
$\beta''_3 = 12{,}5°$
$S''_4: \alpha''_4 = 17{,}5°$
$\beta''_4 = 12{,}5°$

pour laquelle la moyenne des appréciations de qualité atteint 16,4.

– Zone II: de très bonne qualité, intérieure au quadrilatère défini par les quatre sommets suivants:

$S'_1: \alpha'_1 = 17{,}5°$
$\beta'_1 = 27{,}5°$
$S'_2: \alpha'_2 = 7{,}5°$
$\beta'_2 = 20°$
$S'_3: \alpha'_3 = 7{,}5°$
$\beta'_3 = 15°$
$S'_4: \alpha'_4 = 17{,}5°$
$\beta'_4 = 7{,}5°$

et à l'extérieur de la zone I, pour laquelle la moyenne des notes d'appréciation atteint 15.

– Zone III: de qualité encore bonne mais moindre; la zone est définie par les points:

$S_1: \alpha_1 = 15°$ (confondu avec U)
$\beta_1 = 0°$
$S_2: \alpha_2 = 15°$
$\beta_2 = 30°$
$S_3: \alpha_3 = 5°$ (confondu avec R)
$\beta_3 = 20°$
$S_4: \alpha_4 = 25°$ (confondu avec N)
$\beta_4 = 20°$

et à l'extérieur de la zone II, la moyenne des notes d'appréciation est de l'ordre de 13.

A l'extérieur de la zone III de bonne qualité définie par les points $S_1$, $S_2$, $S_3$, $S_4$, on rencontre des points tels que P; O; S; T; V; W; M, où les notes d'appréciation sont inférieures à 13 et généralement de l'ordre de 6 à 12. Cette zone est considérée comme présentant une qualité opérationnelle insuffisante.

D'autres couples de gaz peuvent être utilisés pour souder les aciers au carbone, par exemple argon au centre, mélange argon/15% $CO_2$ pour le flux périphérique.

Pour souder des alliages légers, le couple préféré est un mélange 30% argon/70% hélium au centre, argon pur pour le flux périphérique.

Dans certaines applications, pour améliorer encore la pénétration de l'arc, on pourra utiliser, pour le flux périphérique, de l'argon mélangé à une proportion limitée d'un gaz métallurgiquement actif, par exemple $H_2$ (jusqu'à 5%), $CO_2$ (jusqu'à 20%) ou $O_2$ (jusqu'à 5%).

L'invention permet de souder des épaisseurs nettement accrues. Pour une épaisseur donnée, la puissance électrique nécessaire est nettement réduite. La vitesse de soudage est nettement augmentée.

En variante, l'extrémité de sortie de la paroi intérieure 3 du manchon peut être rendue légèrement convergente, comme illustré en 14 à la fig. 1. Cela crée une constriction pneumatique de l'arc qui en améliore encore le pouvoir de pénétration.

## Revendications

1. Torche de soudage à arc à électrode réfractaire disposée axialement et protection à double flux, du type comprenant, d'une part, un premier conduit annulaire (10) entre ladite électrode axiale (1) et un manchon concentrique (2), ce premier conduit ayant une largeur, suivant un rayon, comprise entre 0,5 et 1,5 mm, d'autre part, un deuxième conduit annulaire (11) concentrique au premier entre ledit manchon et une buse de torche (7), caractérisée en ce que ledit second conduit annulaire (11) a une forme générale convergente entre une paroi externe (4) du manchon présentant un angle de convergence au sommet α et une paroi interne (8) de la buse présentant un angle de convergence au sommet β, les angles de convergence au sommet α et β étant choisis, dans un système de coordonnées rectangulaires dont l'abscisse représente l'angle de convergence au sommet α et dont l'ordonnée représente l'angle de convergence au sommet β, à l'intérieur d'un quadrilatère délimité par les quatre sommets $S'_1$, $S'_2$, $S'_3$, $S'_4$ suivants:

$S'_1: \alpha'_1 = 17{,}5°$
$\beta'_1 = 27{,}5°$
$S'_2: \alpha'_2 = 7{,}5°$
$\beta'_2 = 20°$
$S'_3: \alpha'_3 = 7{,}5°$
$\beta'_3 = 15°$
$S'_4: \alpha'_4 = 17{,}5°$
$\beta'_4 = 7{,}5°$

2. Torche de soudage selon la revendication 1, caractérisée en ce que les angles α et β sont choisis à l'intérieur d'un quadrilatère dont les sommets $S''_1$, $S''_2$, $S''_3$, $S''_4$ sont les suivants:

$S''_1: \alpha''_1 = 17{,}5°$
$\beta''_1 = 22{,}5°$
$S''_2: \alpha''_2 = 12{,}5°$
$\beta''_2 = 22{,}5°$

→

*Tableau I*

| Conditions de soudage et d'appréciation | | | | | | | | Qualités de l'arc | | Qualités des soudures | | | Note globale | |
|---|---|---|---|---|---|---|---|---|---|---|---|---|---|---|
| Angles | | e (mm) | v (cm/min) | ld (mm) | lv (mm) | lv/ld | v × lv/ld | pouvoir de pénétration | stabilité d'arc | bombé superficiel | régularité | | sur 28 | sur 20 |
| manchon α | buse β | | | | | | | | | | endroit | envers | | |
| 10 | (A) 10 | 1,5<br>3<br>4 | 15,3<br>11<br>6,6 | 4,5<br>5,3<br>6,5 | 4,5<br>4,5<br>5 | | 15,5<br>9,5<br>5 | +<br>++<br>+ | 0<br>++<br>++ | +<br>++ | +<br>+<br>++ | +<br>++<br>0 | 18 | 13 |
| | (B) 15 | 1,5<br>3<br>4 | 18<br>13<br>6,6 | 4<br>5<br>5,5 | 4<br>3,9<br>4,5 | | 18<br>10<br>5,5 | ++<br>++<br>+ | ++<br>++<br>++ | ++<br>+ | +<br>+<br>++ | +<br>+<br>+ | 21 | 15 |
| | (C) 20 | 1,5<br>3<br>4 | 16,8<br>11,7<br>6 | 4,5<br>5,4<br>6,8 | 4,5<br>4,3<br>5 | | 17<br>9,5<br>4,5 | ++<br>++<br>0 | ++<br>++<br>++ | ++<br>+ | +<br>+<br>++ | +<br>++<br>++ | 22 | 15,5 |
| | (D) 25 | 1,5<br>3<br>4 | 13,2<br>11,4<br>6 | 5<br>5,5<br>6,8 | 5,5<br>4<br>5 | >1 | 13<br>8,5<br>4,5 | 0<br>+<br>0 | 0<br>++<br>++ | ++<br>+ | +<br>++<br>++ | +<br>++<br>++ | 18 | 13 |
| 15 | (E) 10 | 1,5<br>3<br>4 | 15,3<br>8,5<br>6 | 4<br>6<br>6,3 | 4,5<br>5<br>6,5 | >1<br><br>>1 | 15,5<br>7<br>6 | +<br>0<br>++ | ++<br>++<br>++ | +<br>0 | ++<br>+<br>++ | ++<br>++<br>++ | 21 | 15 |
| | (F) 15 | 1,5<br>3<br>4 | 18<br>11,7<br>6,7 | 3,5<br>5,3<br>6 | 4,3<br>4<br>5 | >1 | 18<br>9<br>5,5 | ++<br>++<br>+ | ++<br>++<br>++ | ++<br>++ | ++<br>++<br>++ | ++<br>++<br>+ | 26 | 18,5 |
| | (G) 20 | 1,5<br>3<br>4 | 18<br>9,2<br>6 | 4,3<br>5,3<br>5,8 | 4,3<br>5,3<br>5,5 | | 18<br>9<br>5,5 | ++<br>++<br>+ | ++<br>++<br>++ | +<br>+ | ++<br>++<br>++ | ++<br>++<br>+ | 24 | 17 |
| | (H) 25 | 1,5<br>3<br>4 | 15,3<br>8,8<br>6 | 4,5<br>6,4<br>5,5 | 4,5<br>5,1<br>6,3 | <br><br>>1 | 15,5<br>7<br>6 | +<br>0<br>++ | 0<br>+<br>++ | +<br>+ | ++<br>++<br>++ | ++<br>++<br>+ | 20 | 14,5 |
| 20 | (I) 10 | 1,5<br>3<br>4 | 14,4<br>10,5<br>6 | 4,5<br>5,6<br>5,5 | 4,5<br>4,5<br>5,5 | | 14,5<br>8,5<br>6 | 0<br>+<br>++ | 0<br>+<br>0 | ++<br>+ | +<br>++<br>++ | +<br>++<br>+ | 16 | 11,5 |
| | (J) 15 | 1,5<br>3<br>4 | 14,4<br>10,2<br>6,6 | 4,5<br>5,6<br>5,8 | 4,8<br>4,5<br>4,5 | >1 | 14,5<br>8<br>5 | 0<br>+<br>+ | +<br>++<br>++ | ++<br>++ | +<br>+<br>++ | +<br>+<br>+ | 18 | 13 |

→

*Tableau I* (suite)

| Conditions de soudage et d'appréciation | | | | | | | | Qualités de l'arc | | Qualités des soudures | | | Note globale | |
|---|---|---|---|---|---|---|---|---|---|---|---|---|---|---|
| Angles | | e (mm) | v (cm/min) | ld (mm) | lv (mm) | $\frac{lv}{ld}$ | $v \times \frac{lv}{ld}$ | pouvoir de pénétration | stabilité d'arc | bombé superficiel | régularité | | sur 28 | sur 20 |
| manchon α | buse β | | | | | | | | | | endroit | envers | | |
| 20 | (K) 20 | 1,5<br>3<br>4 | 13,8<br>9<br>6,6 | 4,5<br>6<br>6 | 5,5<br>5,3<br>4,5 | >1 | 14<br>8<br>5 | 0<br>+<br>+ | 0<br>++<br>++ | 0<br>++ | ++<br>+<br>++ | ++<br>+<br>+ | 17 | 12 |
| | (L) 25 | 1,5<br>3<br>4 | 15,6<br>9,6<br>6 | 4,3<br>5,6<br>6,4 | 4,5<br>5<br>5 | >1 | 15,5<br>8,5<br>4,5 | +<br>+<br>0 | +<br>++<br>++ | +<br>+ | ++<br>++<br>++ | ++<br>+<br>+ | 19 | 13,5 |
| 25 | (M) 15 | 1,5<br>3<br>4 | 15,6<br>8,5<br>5,4 | 4,5<br>6,6<br>6,5 | 4<br>5,1<br>6,5 | | 14<br>6,5<br>5,5 | 0<br>0<br>+ | 0<br>++<br>++ | +<br>0 | ++<br>+<br>++ | ++<br>+<br>0 | 14 | 10 |
| | (N) 20 | 1,5<br>3<br>4 | 16,2<br>10<br>6 | 4<br>5,9<br>5,5 | 4<br>4,9<br>5,5 | | 16<br>8,5<br>6 | +<br>+<br>++ | 0<br>++<br>++ | +<br>+ | +<br>+<br>++ | +<br>0<br>+ | 16 | 11,5 |
| | (O) 25 | 1,5<br>3<br>4 | 16,8<br>9,3<br>5,4 | 4,3<br>6<br>6,5 | 3,8<br>4,6<br>5 | | 15<br>7<br>4 | +<br>0<br>0 | 0<br>++<br>++ | +<br>+ | +<br>+<br>++ | +<br>0<br>0 | 12 | 8,5 |

*Tableau II*

| Points | Conditions de soudage et d'appréciation: Angles: manchon α | Angles: buse β | v (cm/min) | ld (mm) | lv (mm) | lv/ld | v × lv/ld | Qualités de l'arc: pouvoir de pénétration | Qualités de l'arc: stabilité d'arc | Qualités des soudures: bombé superficiel | Qualités des soudures: régularité: endroit | régularité: envers | Note sur 20 |
|---|---|---|---|---|---|---|---|---|---|---|---|---|---|
| P | 5 | 10 | 6 | 6,5 | 5,5 | | 5 | + | ++ | + | + | + | 12 |
| Q | | 15 | 5,4 | 6,5 | 4 | | 3,5 | 0 | ++ | + | 0 | 0 | 6 |
| R | | 20 | 6 | 7 | 5 | | 4,5 | 0 | ++ | + | + | + | 10 |
| S | | 25 | 6 | 6,5 | 4 | | 3,5 | 0 | ++ | + | 0 | 0 | 6 |
| T | 10 | 0 | 6 | 6 | 4 | | 4 | 0 | ++ | ++ | ++ | 0 | 12 |
| A' | | 10 | 6,6 | 6,5 | 5 | | 5 | + | ++ | ++ | ++ | 0 | 14 |
| B' | | 15 | 6,6 | 5,5 | 4,5 | | 5,5 | + | ++ | + | ++ | + | 14 |
| C' | | 20 | 6 | 6,8 | 5 | | 4,5 | 0 | ++ | + | ++ | ++ | 14 |
| D' | | 25 | 6 | 6,8 | 5 | | 4,5 | 0 | ++ | + | ++ | ++ | 14 |
| U | 15 | 0 | 6 | 6,5 | 5,5 | | 5 | + | ++ | 0 | + | + | 12 |
| E' | | 10 | 6 | 6,3 | 6,5 | >1 | 6 | ++ | ++ | 0 | ++ | ++ | 16 |
| F' | | 15 | 6,7 | 6 | 5 | | 5,5 | + | ++ | ++ | ++ | + | 16 |
| G' | | 20 | 6 | 5,8 | 5,5 | | 5,5 | + | ++ | + | ++ | + | 14 |
| H' | | 25 | 6 | 5,5 | 6,3 | >1 | 6 | ++ | ++ | + | ++ | + | 16 |
| V | 20 | 0 | 6,1 | 6,5 | 5 | | 4,5 | 0 | ++ | + | + | + | 10 |
| I' | | 10 | 6 | 5,5 | 5,5 | | 6 | ++ | 0 | + | ++ | + | 12 |
| J' | | 15 | 6,6 | 5,8 | 4,5 | | 5 | + | ++ | ++ | ++ | + | 16 |
| K' | | 20 | 6,6 | 6 | 4,5 | | 5 | + | ++ | ++ | ++ | + | 16 |
| L' | | 25 | 6 | 6,4 | 5 | | 4,5 | 0 | ++ | + | ++ | + | 12 |
| W | 25 | 0 | 6 | 7 | 5,5 | | 4,5 | 0 | ++ | + | ++ | + | 12 |
| X | | 10 | ///// | ///// | //// | //// | ////// | ///////// | /////// | //////// | /////// | ///// | //// |
| M' | | 15 | 5,4 | 6,5 | 6,5 | | 5,5 | + | ++ | 0 | ++ | 0 | 10 |
| N' | | 20 | 6 | 5,5 | 5,5 | | 6 | ++ | ++ | + | ++ | + | 16 |
| O' | | 25 | 5,4 | 6,5 | 5 | | 4 | 0 | ++ | + | ++ | 0 | 10 |

$S''_3 : \alpha''_3 = 12{,}5°$
$\beta''_3 = 12{,}5°$
$S''_4 : \alpha''_4 = 17{,}5°$
$\beta''_4 = 12{,}5°$

3. Torche de soudage selon l'une des revendications 1 ou 2, caractérisée en ce que le rapport ($D_2/D_1$) du diamètre extérieur de sortie ($D_2$) du manchon (2) au diamètre intérieur de sortie ($D_1$) de ce manchon est compris entre 1,6 et 2,1.

4. Torche de soudage selon la revendication 3, caractérisée en ce que le rapport ($D_3/D_2$) du diamètre intérieur de sortie ($D_3$) de la buse (7) au diamètre extérieur de sortie ($D_2$) du manchon (2) est compris entre 1,6 et 2,1.

5. Torche de soudage selon l'une des revendications 1 à 4, caractérisée en ce que les faces d'extrémités du manchon (2) et de la buse (7) sont situées à peu près dans un même plan perpendiculaire à l'axe de la torche.

6. Torche de soudage selon l'une des revendications 1 à 5, caractérisée en ce que l'électrode (1) fait saillie au-delà du manchon (2) sur une distance comprise entre 3 et 15 mm, de préférence entre 3 et 6 mm.

7. Torche de soudage selon l'une des revendications 1 à 6, caractérisée en ce que les parois externe (4) du manchon (2) et interne (8) de la buse (7) sont purement coniques sur une distance axiale (X) au moins égale à 13 mm.

8. Torche de soudage selon l'une des revendications 1 à 7, caractérisée en ce que l'extrémité de sortie de la paroi interne (3) du manchon (2) est convergente.

9. Procédé de soudage à l'arc, caractérisé en ce qu'on établit une différence de potentiel entre une pièce à souder et l'électrode (1) d'une torche de soudage selon l'une des revendications 1 à 8 en envoyant, dans ledit premier conduit (10), un gaz inerte contenant éventuellement de l'hydrogène dans une proportion au plus égale à 10%, et en envoyant, dans le second conduit (11), un gaz inerte contenant éventuellement un gaz métallurgiquement actif.

10. Procédé selon la revendication 9, pour le soudage d'aciers au carbone ou inoxydables, caractérisé en ce qu'on envoie, dans le premier conduit (10), de l'argon contenant 5% d'hydrogène et, dans le second conduit (11), de l'argon pur.

11. Procédé selon la revendication 9, pour le soudage d'alliages légers, caractérisé en ce qu'on envoie, dans le premier conduit (10), un mélange argon/hélium à 70% d'hélium et, dans le second conduit (11), de l'argon pur.

12. Procédé selon l'une des revendications 9 à 11, caractérisé en ce que le gaz envoyé dans le premier conduit (10) a un débit compris entre 1,5 et $4/\sqrt{d_{Ar}}$ l/min, où $d_{Ar}$ désigne la densité du gaz par rapport à l'argon.

13. Procédé selon la revendication 12, caractérisé en ce que le gaz envoyé dans le second conduit (11) a un débit qui, exprimé en litres par minute, est de l'ordre de grandeur de $D_3/\sqrt{d_{Ar}}$, où $D_3$ désigne le diamètre intérieur de sortie de la buse (7), exprimé en millimètres.

## Patentansprüche

1. Lichtbogenschweissbrenner mit einer axial angeordneten nichtabschmelzenden Elektrode und Zweifachflussschutz vom Typ, der einerseits eine erste Ringleitung (10) zwischen der axialen Elektrode (1) und einer konzentrischen Hülse (2), wobei die erste Leitung eine Grösse entsprechend einem Radius zwischen 0,5 und 1,5 mm hat, und andererseits eine zweite zu der ersten konzentrische Ringleitung (11) zwischen der Hülse und einer Brennerdüse (7) besitzt, dadurch gekennzeichnet, dass die zweite Ringleitung (11) eine allgemeine Form besitzt, die zwischen einer Aussenwand (4) der Hülse, die einen Konvergenzwinkel am Scheitel α hat, und einer Innenwand (8) der Düse, die einen Konvergenzwinkel am Scheitel β hat, konvergiert, wobei die Konvergenzwinkel am Scheitel α und β in einem rechtwinkligen Koordinatensystem, dessen Abszisse den Konvergenzwinkel am Scheitel α und dessen Ordinate den Konvergenzwinkel am Scheitel β wiedergibt, im Ineren eines durch die folgenden vier Ecken $S'_1$, $S'_2$, $S'_3$ und $S'_4$ begrenzten ungleichmässigen Viereckes ausgewählt sind:

$S'_1 : \alpha'_1 = 17{,}5°$
$\beta'_1 = 27{,}5°$
$S'_2 : \alpha'_2 = 7{,}5°$
$\beta'_2 = 20°$
$S'_3 : \alpha'_3 = 7{,}5°$
$\beta'_3 = 15°$
$S'_4 : \alpha'_4 = 17{,}5°$
$\beta'_4 = 7{,}5°$

2. Schweissbrenner nach Anspruch 1, dadurch gekennzeichnet, dass die Winkel α und β im Inneren eines umgleichmässigen Vierecks ausgewählt sind, deren Ecken $S''_1$, $S''_2$, $S''_3$ und $S''_4$ folgende sind:

$S''_1 : \alpha''_1 = 17{,}5°$
$\beta''_1 = 22{,}5°$
$S''_2 : \alpha''_2 = 12{,}5°$
$\beta''_2 = 22{,}5°$
$S''_3 : \alpha''_3 = 12{,}5°$
$\beta''_3 = 12{,}5°$
$S''_4 : \alpha''_4 = 17{,}5°$
$\beta''_4 = 12{,}5°$

3. Schweissbrenner nach einem der Ansprüche 1 oder 2, dadurch gekennzeichnet, dass das Verhältnis ($D_2/D_1$) des Ausgangsaussendurchmessers ($D_2$) der Hülse (2) zum Ausgangsinnendurchmesser ($D_1$) dieser Hülse zwischen 1,6 und 2,1 liegt.

4. Schweissbrenner nach Anspruch 3, dadurch gekennzeichnet, dass das Verhältnis ($D_3/D_2$) des Ausgangsinnendurchmessers ($D_3$) der Düse (7) zum Ausgangsaussendurchmesser ($D_2$) der Hülse (2) zwischen 1,6 und 2,1 liegt.

5. Schweissbrenner nach einem der Ansprüche 1 bis 4, dadurch gekennzeichnet, dass die Endflächen der Hülse (2) und der Düse (7) ungefähr in der gleichen Ebene senkrecht zur Achse des Brenners liegen.

6. Schweissbrenner nach einem der Ansprüche 1 bis 5, dadurch gekennzeichnet, dass die Elektrode (1) über die Hülse (2) über einen Abstand zwischen 3 und 15 mm, vorzugsweise zwischen 3 und 6 mm, hinaus vorspringt.

7. Schweissbrenner nach einem der Ansprüche 1 bis 6, dadurch gekennzeichnet, dass die Aussenwand (4) der Hülse (2) und die Innenwand (8) der Düse (7) über einen axialen Abstand (X) von wenigstens 13 mm rein kegelförmig sind.

8. Schweissbrenner nach einem der Ansprüche 1 bis 7, dadurch gekennzeichnet, dass das Ausgangsende der Innenwand (3) der Hülse (2) konvergiert.

9. Verfahren zum Lichtbogenschweissen, dadurch gekennzeichnet, dass man einen Potentialunterschied zwischen einem zu schweissenden Teil und der Elektrode (1) eines Schweissbrenners nach einem der Ansprüche 1 bis 8 vorsieht, indem man in die erste Leitung (10) ein Inertgas, das gegebenenfalls Wasserstoff in einem Mengenverhältnis von höchsten 10% enthält, einführt und in die zweite Leitung (11) ein Inertgas, das gegebenenfalls ein metalurgisch aktives Gas enthält, einführt.

10. Verfahren nach Anspruch 9 zum Schweissen von Kohlenstoffstählen oder inoxidierbaren Stählen, dadurch gekennzeichnet, dass man in die erste Leitung (10) 5% Wasserstoff enthaltendes Argon und in die zweite Leitung (10) reines argon schickt.

11. Verfahren nach Anspruch 9 zum Schweissen schwacher Legierungen, dadurch gekennzeichnet, dass man in die erste Leitung (10) ein Gemisch von Argon und Helium mit 70% Helium und in die zweite Leitung (11) reines Argon schickt.

12. Verfahren nach einem der Ansprüche 9 bis 11, dadurch gekennzeichnet, dass das in die erste Leitung (10) geschickte Gas einen Durchsatz zwischen 1,5 und $4/\sqrt{d_{Ar}}$ l/min hat, wobei $d_{Ar}$ die Dichte des Gases gegenüber Argon bedeutet.

13. Verfahren nach Anspruch 12, dadurch gekennzeichnet, dass das in die zweite Leitung (11) geschickte Gas einen Durchsatz hat, der, ausgedrückt in Litern pro Minute, in der Grössenordnung von $D_3/\sqrt{d_{Ar}}$ ist, wobei $D_3$ den Ausgangsinnendurchmesser der Düse (7), ausgedrückt in Millimetern, bedeutet.

**Claims**

1. Arc welding torch having a non-consumable electrode arranged axially and double-protective flux, of the type comprising on the one hand a first annular conduit (10) between said axial electrode (1) and a concentric sleeve (2), said first conduit having a size with a radius between 0.5 and 1.5 mm, and on the other hand a second annular conduit (11) concentric to the first one between said sleeve and a torch nozzle (7), characterized in that the said second annular conduit (11) has a general shape converging between an outer wall (4) of the sleeve presenting an angle of convergence at the apex α and an inner wall (8) of the nozzle presenting an angle of convergence at the apex β, the angles of convergence at the apex α and β being selected in a rectangular system of coordinates the abscissa of which represents the angle of convergence at the apex α and the ordinate of which represents the angle of convergence at the apex β, within a quadrilateral delimited by the following four corners $S'_1$, $S'_2$, $S'_3$ and $S'_4$:

$S'_1: \alpha'_1 = 17{,}5°$
$\beta'_1 = 27{,}5°$
$S'_2: \alpha'_2 = 7{,}5°$
$\beta'_2 = 20°$
$S'_3: \alpha'_3 = 7{,}5°$
$\beta'_3 = 15°$
$S'_4: \alpha'_4 = 17{,}5°$
$\beta'_4 = 7{,}5°$

2. Welding torch according to Claim 1, characterized in that the angles α and β are selected within a quadrilateral the corners $S''_1$, $S''_2$, $S''_3$ and $S''_4$ of which are the following:

$S''_1: \alpha''_1 = 17{,}5°$
$\beta''_1 = 22{,}5°$
$S''_2: \alpha''_2 = 12{,}5°$
$\beta''_2 = 22{,}5°$
$S''_3: \alpha''_3 = 12{,}5°$
$\beta''_3 = 12{,}5°$
$S''_4: \alpha''_4 = 17{,}5°$
$\beta''_4 = 12{,}5°$

3. Welding torch according to one of the Claims 1 or 2, characterized in that the ratio $(D_2/D_1)$ of the outer exit diameter $(D_2)$ of the sleeve (2) to the inner exit diameter $(D_1)$ of the sleeve is between 1.6 and 2.1.

4. Welding torch according to Claim 3, characterized in that the ratio $(D_3/D_2)$ of the inner exit diameter $(D_3)$ of the nozzle (7) to the outer exit diameter $(D_2)$ of the sleeve (2) is between 1.6 and 2.1.

5. Welding torch according to one of the Claims 1 to 4, characterized in that the faces of the extremities of the sleeve (2) and of the nozzle (7) are situated almost in the same plane perpendicular to the axis of the torch.

6. Welding torch according to one of the Claims 1 to 5, characterized in that the electrode (1) is salient beyond the sleeve (2) through a distance between 3 and 15 mm, preferably between 3 and 6 mm.

7. Welding torch according to one of the Claims 1 to 6, characterized in that the outer wall (4) of the sleeve (2) and the inner wall (8) of the nozzle (7) are purely conical through an axial distance (X) of at least 13 mm.

8. Welding torch according to one of the Claims 1 to 7, characterized in that the exit extremity of the inner wall (3) of the sleeve (2) is convergent.

9. Process of arc welding, characterized in that one provides a potential difference between a piece to be welded and the electrode (1) of a welding torch according to one of the Claims 1 to 8 by passing an inert gas containing eventually hydrogen in a proportion of at most 10% into said weak alloys, characterized in that one passes a mixture of argon and helium with 70% of helium into the first conduit (10) and pure argon into the second conduit (11).

12. Process according to one of the Claims 9 to 11, characterized in that the gas passed into the first conduit (10) has a throughput between 1.5 and $4/\sqrt{d_{Ar}}$ l/min wherein $d_{Ar}$ means the density of the gas in relation to argon.

13. Process according to Claim 12, characterized in that the gas passed into the second conduit (11) has a throughput which, expressed first conduit (10) and passing an inert gas containing eventually a gas metallurgically active into the second conduit (11).

10. Process according to Claim 9 for welding carbon steels or inoxidable steels, characterized in that one passes argon containing 5% of hydrogen into the first conduit (10) and pure argon into the second conduit (11).

11. Process according to Claim 9 for welding as litres per minute, is in the order of $D_3/\sqrt{d_{Ar}}$, wherein $D_3$ means the inner exit diameter of the nozzle (7), expressed as millimetres.

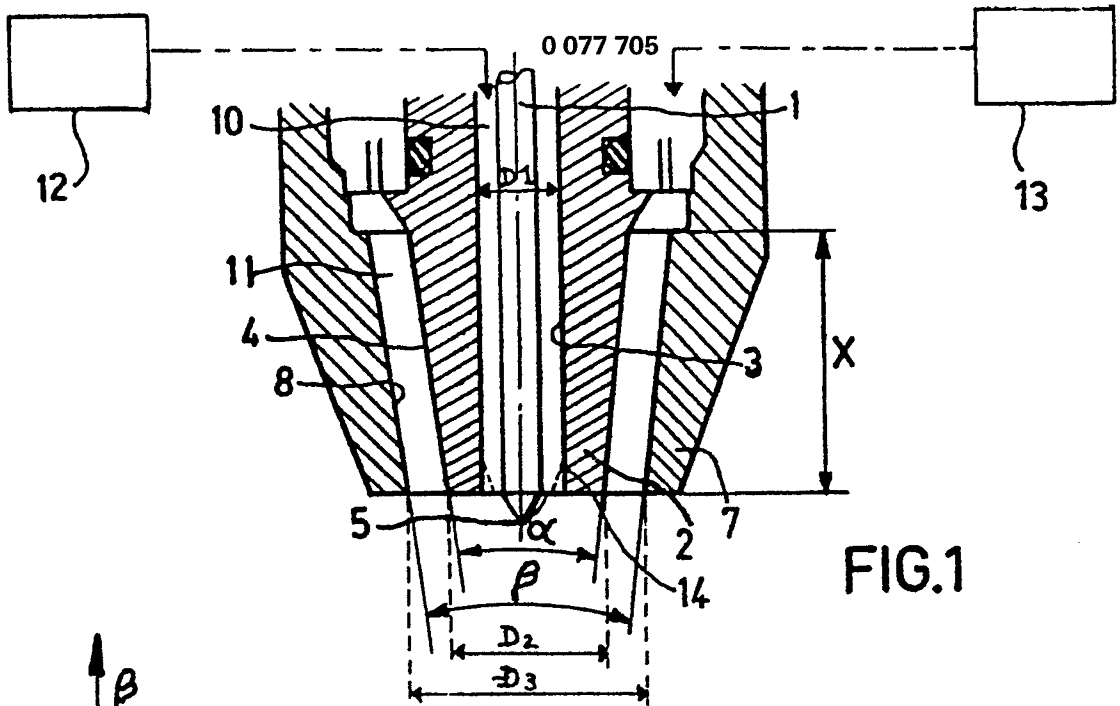
12
13
10
1
D1
11
4
3
X
8
5
α
2
7
14
β
D2
D3

FIG.1

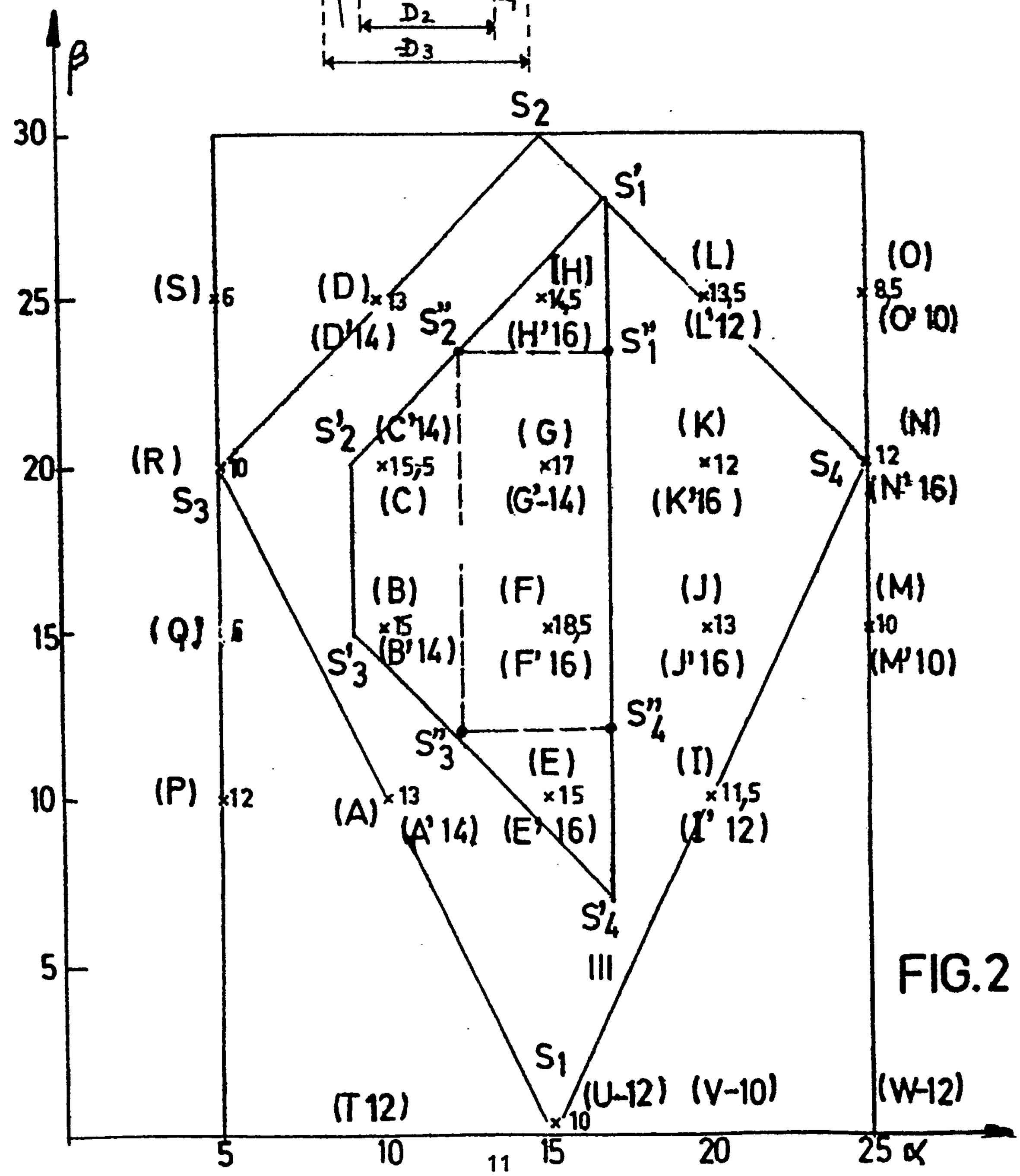
β
30
25
20
15
10
5
5
10
15
20
25 α
S2
S'1
S''2
S''1
S'2
S3
S4
S'3
S''3
S''4
S'4
S1
III
(S) ×6
(D) ×13
(D' 14)
(H) ×14,5
(H' 16)
(L) ×13,5
(L' 12)
(O) ×8,5
(O' 10)
(R) ×10
(C' 14) ×15,5
(C)
(G) ×17
(G' 14)
(K) ×12
(K' 16)
(N) ×12
(N' 16)
(Q) ×6
(B) ×15
(B' 14)
(F) ×18,5
(F' 16)
(J) ×13
(J' 16)
(M) ×10
(M' 10)
(P) ×12
(A) ×13
(A' 14)
(E) ×15
(E' 16)
(I) ×11,5
(I' 12)
(T 12)
×10
(U-12)
(V-10)
(W-12)

FIG.2